Europäisches Patentamt

European Patent Office

Office européen des brevets

(19)

(11) Veröffentlichungsnummer: **0 053 677**
**B1**

(12) **EUROPÄISCHE PATENTSCHRIFT**

(45) Veröffentlichungstag der Patentschrift:
07.01.87

(21) Anmeldenummer: **81108432.6**

(22) Anmeldetag: **16.10.81**

(51) Int. Cl.⁴: **G 01 N 21/37**

(54) **Nichtdispersiver Infrarot-Gasanalysator.**

(30) Priorität: **08.12.80 DE 3046234**

(43) Veröffentlichungstag der Anmeldung:
**16.06.82 Patentblatt 82/24**

(45) Bekanntmachung des Hinweises auf die Patenterteilung:
**07.01.87 Patentblatt 87/2**

(84) Benannte Vertragsstaaten:
**DE FR GB NL**

(56) Entgegenhaltungen:
**DE - A - 2 405 317**
**DE - A - 2 639 210**
**US - A - 3 950 644**

(73) Patentinhaber: **Siemens Aktiengesellschaft Berlin und München, Wittelsbacherplatz 2, D-8000 München 2 (DE)**

(72) Erfinder: **Weinel, Johann, Ing.grad., Strassburger Strasse 13, D-7500 Karlsruhe (DE)**

# Beschreibung

Die Erfindung bezieht sich auf einen nichtdispersiven Infrarot-(NDIR)-Gasanalysator mit negativer Filterung und selektivem Empfänger entsprechend dem ersten Teil des einzigen Anspruchs.

Bei bekannten Geräten dieser Art (siehe z.B. DE-A-2 405 317), bei denen insbesondere für schwierige Messaufgaben selektive Empfänger mit negativer Filterung kombiniert werden, bestehen die Mittel zur selektiven Beeinflussung der in die Empfängerkammern gelangenden Strahlung in der Regel aus einem optischen Gasfilter, also einem in einer strahlungsdurchlässigen Kammer eingeschlossenen Gas, dessen Hauptabsorptionsbande der der Messkomponente im Probengas entspricht. Dieses sogenannte Selektivierungsfilter ist in einem der Strahlengänge vor der Empfängerkammer angeordnet.

Die Konzentration der Gasfüllung im optischen Gasfilter wird so hoch gewählt, dass ein Teil der Energie, besonders im Zentrum einer Absorptionsbande, vor Eintritt in die Empfängerkammer absorbiert wird.

Nachteilig bei der Verwendung optischer Gasfilter ist der relativ grosse entwicklungsmässige und gerätetechnische Aufwand bei der Herstellung und Bereitstellung der hinsichtlich Länge und Füllung unterschiedlichen Gasfilter für die in Frage kommenden Messkomponenten.

Ein weiterer Nachteil bei bekannten Geräten ist die eine Phasenverschiebung bei der Differenzbildung der Messsignale verursachende Unsymmetrie der Gasvolumen in den beiden Strahlengängen.

Es besteht somit die Aufgabe, einen NDIR-Gasanaylsator der eingangs genannten Art so zu verbessern, dass er bei geringem konstruktiven Aufwand vielseitig einsetzbar und hinsichtlich der Absorptionslängen der Gasvolumen symmetrisch aufgebaut ist.

Eine Lösung der Aufgabe erfolgt durch die im kennzeichnenden Teil des einzigen Anspruchs angegebenen Merkmale.

Bei dieser Anordnung kann das optische Gasfilter entfallen. Der den Einfluss der Bandenrandstrahlung verstärkende reflektierte Anteil kann je nach Messaufgabe und Messkomponente so eingestellt werden, dass zwischen den Empfängerkammern ein verwertbares Differenzsignal auftritt, welches dem Anteil des Messkomponente im Probengas entspricht. Die Gasvolumen in beiden Strahlengängen, insbesondere in den Empfängerkammern, können in jedem Fall hinsichtlich ihrer Absorptionslängen streng symmetrisch ausgebildet werden, so dass eine Phasenverschiebung und das daraus resultierende Störsignal nicht auftritt.

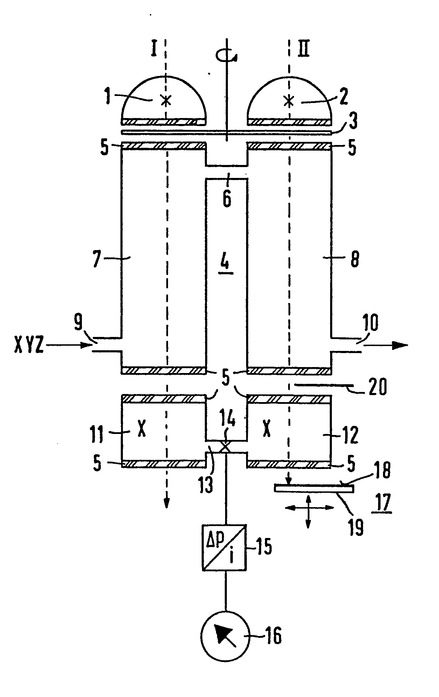

Zur Erläuterung der Erfindung ist in der Figur das Aufbauprinzip eines Zweistrahl-NDIR-Gasanalysators dargestellt und im folgenden beschrieben.

Die von zwei Infrarot-Strahlungsquellen 1 und 2 ausgehende Strahlung wird gebündelt und tritt, von der umlaufenden Blende 3 periodisch unterbrochen, in zwei parallele Strahlengänge I und II ein.

Eine Messküvette 4, die aus zwei parallel angeordneten, an ihren Stirnseiten mit strahlungsdurchlässigen Fenstern 5 versehen und über die Leitung 6 strömungsmässig miteinander verbundenen gleichen Hohlzylindern 7 und 8 besteht, weist einen Gaseinlass 9 in den Hohlzylinder 7 und einen Gasauslass 10 aus dem Hohlzylinder 8 auf. Ein aus den Gaskomponenten X, Y, Z bestehendes Probengas strömt durch die Messküvette 4.

Auf die Messküvette 4 folgt in jedem Strahlengang jeweils eine Empfängerkammer 11, 12 mit gleichen Abmessungen, die an ihren vorderen und rückwärtigen Stirnseiten mit strahlungsdurchlässigen Fenstern 5 versehen ist. Soll beispielsweise der Anteil der Komponente X am Probengas, also die Messkomponente, bestimmt werden, so sind die Empfängerkammern mit einem Gas der Gasmischung gefüllt, das die Messkomponente enthält oder deren IR-Absorptionsbanden aufweist. Die beiden gleichen Empfängerkammern 11 und 12 sind über eine Leitung 13 verbunden, die einen nach dem Prinzip eines thermischen Anemometers arbeitenden Strömungsfühler 14 enthält, der als Messwertaufnehmer eines Messumformers 15 ein elektrisches Signal für die Anzeige 16 abgibt.

Hinter dem in Strahlungsrichtung rückwärtigen Fenster 5 der Empfängerkammer 12 im Strahlengang II ist als strahlenreflektierendes Mittel 17 eine ebene, mit einer reflektierenden Schicht 18 versehene Platte 19, z.B. ein Spiegel, relativ zur Mittelachse des Strahlengangs II axial und/oder radial verschiebbar oder um eine, in einer parallelen Ebene zum Austrittsfenster 5 der Empfängerkammer 12 liegende Achse kippbar angeordnet. Es kann auch eine verstellbare Blende zwischen Austrittsfenster und fest angebrachtem Spiegel vorgesehen werden.

Zur Nullpunkteinstellung wird durch die Messküvette 4 ein nicht IR-absorbierendes Gas geführt. Die von den Infrarot-Strahlern 1 und 2 ausgehende, modulierte Strahlung wird in den mit einem der Messkomponente X entsprechenden Gas gefüllten Empfängerkammern 11 und 12 absorbiert, wobei die Bandenmittelstrahlung der Hauptabsorptionsbande stärker absorbiert wird als die Bandenrandstrahlung, die die Empfängerkammern durch die rückwärtigen Fenster 5 wieder verlässt. Ein Teil der aus der Empfängerkammer 12 austretenden Bandenrandstrahlung wird jedoch mit Hilfe der reflektierenden Mittel 17 wieder zurückgestrahlt, so dass in der Empfängerkammer 12 im Strahlengang II sowohl Bandenmittenwie Bandenrandstrahlung, in der Empfängerkammer 11 im Strahlengang I hauptsächlich Bandenmittenstrahlung absorbiert werden, was zu unterschiedlicher Erwärmung, Druckanstieg und einer dem Differenzdruck entsprechenden Ausgleichsströmung über die Leitung 13 führt.

Durch Verringerung der in die Empfängerkammer 12 eintretenden Strahlungsenergie mit Hilfe einer verschiebbaren Blende 20 wird Druckgleichheit zwischen den beiden Kammern hergestellt. Der Strömungsfühler 14 gibt kein Signal ab. Wird die Messküvette 4 nun mit dem Probengas beströmt, so tritt dort eine Bandenmitten-Vorabsorption auf, die sich stärker in der Empfängerkammer 11 auswirkt, so dass ein dem Differenzdruck Δp zwischen den Empfängerkammern 11 und 12 entsprechendes Signal abgegeben wird, welches dem Anteil der Messkomponente X im Probengas entspricht.

Weisen eine oder mehrere der anderen Komponenten Y, Z des Probengases Absorptionsbanden auf, die sich in ihren Randbezirken mit der der Messkomponente X überlappen, lässt sich durch Verstellung der reflektierenden Mittel 17 und damit Veränderung des zurückgestrahlten Anteils der Bandenrandstrahlung ein bestimmter Wert für die Bandenrandempfindlichkeit einstellen und so die Querempfindlichkeit verringern.

**Patentansprüche**

1. Nichtdispersiver Infrarot-Gasanalysator mit negativer Filterung und selektivem Empfänger, welcher aufweist:

a) zwei parallele Strahlengänge (i, II), die von periodisch unterbrochener IR-Strahlung durchstrahlt sind;

b) eine in beiden Strahlengängen (I, II) liegende, von Probengas durchströmte Messküvette (4);

c) Mittel (20) zur Nullpunkteinstellung durch Veränderung der Strahlungsenergien in den Strahlengängen (I, II);

d) je eine, mit der Messkomponente oder einem ihr absorptionsmässig entsprechenden gasgefüllten Empfängerkammer (11, 12) in jedem der Strahlengänge (I, II);

e) Mittel zur selektiven Beeinflussung der in die Empfängerkammern (11, 12) gelangenden IR-Strahlung;

f) einen Messwertumformer (15) zur Umwandlung des absorptionsabhängigen Differenzdrucks zwischen den Empfängerkammern (11, 12) in ein elektrisches Signal, dadurch gekennzeichnet, dass als Mittel zur selektiven Beeinflussung folgende Merkmale vorgesehen sind:

e1) strahlungsdurchlässige Fenster (5) als in Strahlrichtung gesehen, rückseitige Stirnflächen der beiden gleichartigen Empfängerkammern (11, 12) und

e2) ein reflektierendes Mittel (17), welches hinter einem der Fenster (5) angeordnet ist und einen veränderbaren Anteil der austretenden IR-Strahlung in eine der Empfängerkammern (11 oder 12) reflektiert.

**Claim**

1. A non-dispersive infrared gas analyser with negative filtering and a selective receiver which comprises:

a) two parallel beam paths (I, II) which are irradiated by periodically interrupted IR-radiation;

b) a measuring cell (4) which is arranged in both beam paths (I, II) and through which sample gas flows;

c) means (20) for adjusting the zero point by changing the radiation energies in the beam paths (I, II);

d) a receiving chamber (11, 12) in each of the beam paths (I, II) which is filled with the component to be measured, or a gas which corresponds thereto as regards absorption;

e) means for selectively influencing the IR-radiation received in the receiving chambers (11, 12);

f) a measured value converter (15) for converting the absorption-dependent differential pressure between the receiving chambers (11, 12) into an electrical signal, characterised in that the following features are provided as means for exerting a selective influence:

e1) radiation-transmissive windows (5) as rear end faces (viewed in the direction of radiation) of the two similar receiving chambers (11, 12); and

e2) a reflecting means (17) which is arranged behind one of the windows (5) and reflects a variable portion of the emerging IR-radiation into one of the receiving chambers (11 or 12).

**Revendication**

1. Analyseur de gaz à infrarouge non dispersif, comportant un dispositif de filtrage négatif et un récepteur sélectif et qui comprend:

a) deux trajets parallèles du rayonnement (I, II), qui sont irradiés par un rayonnement infrarouge interrompu périodiquement;

b) une cuve de mesure située dans les deux trajets de rayonnement (I, II) et traversée par le gaz à tester;

c) des moyens (20) pour régler le zéro par modification des énergies de rayonnement dans les trajets de rayonnement (I, II);

d) une chambre respective (11, 12) du récepteur, remplie par le composant à mesurer ou par un gaz correspondant, du point de vue absorption, à ce composant, dans chacun des trajets du rayonnement (I, II);

e) des moyens pour influer de façon sélective sur le rayonnement infrarouge parvenant dans les chambres (11, 12 du récepteur;

f) un transformateur de valeurs de mesure (15) servant à convertir la pression différentielle, qui dépend de l'absorption, entre les chambres (11, 12) du récepteur en un signal électrique, caractérisé par le fait qu'il est prévu, comme moyens servant à réaliser l'influence sélective, les éléments caractéristiques suivants:

e1) des fenêtres (5) transparentes pour le rayonnement réalisées sous la forme de faces frontales arrière, suivant la direction du rayonnement, des deux chambres identiques (11, 12) du récepteur, et

e2) un dispositif réfléchissant (17) qui est disposé derrière l'une des fenêtres (5) et réfléchit un pourcentage variable du rayonnement infrarouge sortant, dans l'une des chambres (11 ou 12) du récepteur.